(19) Europäisches Patentamt
European Patent Office
Office européen des brevets

(11) **EP 4 035 576 A1**

(12) **EUROPEAN PATENT APPLICATION**

(43) Date of publication:
**03.08.2022  Bulletin 2022/31**

(21) Application number: **21169485.6**

(22) Date of filing: **20.04.2021**

(51) International Patent Classification (IPC):
**A47J 36/32** $^{(2006.01)}$

(52) Cooperative Patent Classification (CPC):
**A47J 36/321;** A47J 2043/0733

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.01.2021  PCT/CN2021/074162**

(71) Applicant: **Koninklijke Philips N.V.**
**5656 AG Eindhoven (NL)**

(72) Inventors:
- **CHEN, Yun**
  **5656 AE Eindhoven (NL)**
- **WIJNOLTZ, Anna Louise**
  **5656 AE Eindhoven (NL)**
- **HOONHOUT, Henriette Christine Marie**
  **5656 AE Eindhoven (NL)**
- **DE VREEDE, Jasper**
  **5656 AE Eindhoven (NL)**

(74) Representative: **de Vries, Janna et al**
**Philips Domestic Appliances Nederland B.V.**
**High Tech Campus 42**
**5656 AE Eindhoven (NL)**

(54) **A FOOD PREPARATION SYSTEM**

(57)    A food preparation system weighs ingredients added to a receptacle. For identified ingredient and its added weight, a corresponding amount of a set of different sugar type is estimated, and a total sugar content and a sweetness index of the overall recipe is derived.

The system determines if there are suitable alternative recipes with reduced total sugar content and similar sweetness index and suggests such determined alternative recipes to the user.

FIG. 3

EP 4 035 576 A1

**Description**

FIELD OF THE INVENTION

This invention relates to food preparation systems, and in particular which monitor the following of a recipe in order to provide information and/or guidance to a user.

BACKGROUND OF THE INVENTION

There is an increasing interest in smart food preparation systems, which generate information about a recipe being followed by a user, and provide recipe recommendations.

It is for example known for a food preparation system to monitor ingredients being added and to provide information about nutrient levels in the prepared recipe.

The role of sugar in our diet is a controversial topic, as a high intake of sugars in the diet can result in a number of health problems. Most people are aware of the fact that too much sugar intake can lead to tooth decay, weight gain, possibly type-2-diabetes.Despite knowing this, many people still fail to control their daily intake of sugars.

Sugars enhance flavor, and can help to make nutritious foods more palatable. Consumption of moderate sugars is recommended as the body needs energy to function.

The most common simple sugars found in foods are the single sugars glucose, fructose and galactose and the double sugars maltose, sucrose and lactose. Sugars can be naturally found in fruits, vegetables, milk, dairy products and honey. The dominant sugars in fruits include glucose, fructose and sucrose.

The relative sweetness differs between the different sugar types. The table below shows that a relative sweetness value of sucrose is 100 (i.e. it is a reference value), whereas the value for glucose is 74, and the value of fructose is high at 173.

Table 1

| Sugars and Sweeteners | Relative Sweetness values (sucrose=100) |
|---|---|
| Fructose | 173 |
| Sucrose | 100 |
| Xylose | 100 |
| Honey | 97 |
| Glucose | 74 |
| Sorbitol | 60 |
| Mannitol | 50 |
| Invert Sugar | 50 |
| Galactose | 32 |
| Maltose | 32 |
| Lactose | 16 |

For juices or smoothies, sweetness is one of the key sensory attributes. A typical smoothie recipe comprises liquid, vegetables and fruits. The liquid could be water, milk, yogurt, tea, etc. Sometimes, small amount of oils, nuts and seeds are added. The sweetness is dependent on the sugar contents. The sweetness level of different combinations of fruits and vegetables may be similar, while the total sugar contents are different, and vice versa.

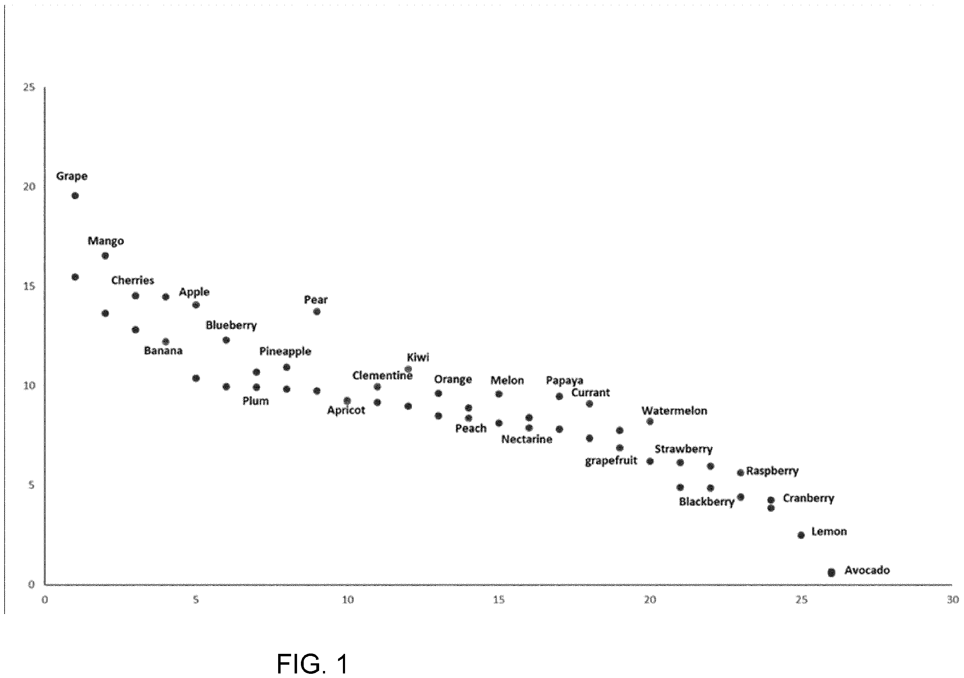

Figure 1 shows a plot of a sweetness versus food types (with decreasing total sugar content along the x-axis), and for each food type shows the sweetness index (explained further below) and the total sugar content (in grams per 100 grams). The sweetness index is in all food types up to raspberry the top plot of the two, whereas for the least few food types (cranberry, lemon and avocado) it is the bottom plot of the two.

For recipe creation and management, it is a significant challenge to balance the taste and health. The preferences and requirements of taste and health differ for different groups of consumers. For instance, some people are very conscious about the sugar intake and taste is of second importance whereas for other people the taste of juices or smoothies is primary. Some people tend to manage the sugar intake, meanwhile others don't compromise the overall taste. Therefore, the attitude of consumers to juices and smoothies is dynamic and variable. There is no standard approach which works for a majority of people.

It would be desirable to be able to provide recipe recommendations which users will enjoy while reducing their sugar intake.

SUMMARY OF THE INVENTION

The invention is defined by the claims.

According to examples in accordance with an aspect of the invention, there is provided a food preparation system, comprising:

a receptacle for receiving ingredients;
a weight sensor for weighing ingredients added to the receptacle; and
a processor arrangement configured to:

identify or receive identification of the ingredients added to the receptacle when a recipe is being followed;
for each identified ingredient and its added weight, estimate a corresponding amount of a set of different sugar types;
for the combination of ingredients, estimate a total sugar content and a sweetness index;
determine if there are suitable alternative recipes with reduced total sugar content; and
suggest the determined alternative recipes to the user.

This food preparation system monitors the added ingredients while a user follows a recipe. The ingredients are identified (either automatically or based on user input) and weighed. The corresponding amounts of different sugar types can then be estimated, for example by accessing a database of different food types and their typical sugar contents. In this way, a total sugar content (e.g. relative to the total mass) for the recipe being followed can be determined. In addition, a sweetness index is calculated. This is a measure of the sweetness (as a taste sensation) resulting from the different types of sugar content.

The system is then able to determine suitable alternative recipes which reduce the total sugar content. Thus, more healthy alternatives are presented to the user.

The presentation of the alternative recipes to the user assists the user in achieving the task of managing their sugar intake based on future uses of the food preparation system. In particular, the system facilitates the selection of recipes for future use which reduce their sugar intake while (when possible) preserving a sweetness of the recipes to be followed.

The alternative recipes may for example be chosen with similar key ingredients (so that they represent a similar recipe but with reduced sugar) or they may be completely different (so they represent alternative recipe choices for the user).

The system is able to balance sugar content and sweetness taste according to user's preferences.

The processor arrangement may be divided between a food preparation unit and a remote processing unit such as a mobile phone or tablet. For example. a food preparation unit may perform the weighing and optionally also ingredient identification, and transmit this information to a remote device such as a mobile phone. The mobile phone may then perform the processing to derive the total sugar content and sweetness index, for example using data stored locally or obtained from a remote database. It may then select the alternative recipes based on this information.

The sweetness index for example comprises a weighted sum of the total amounts of the different sugar types in the recipe. The sweetness of different sugar types is different, so a weighted sum can represent an overall sweetness.

The processor arrangement is for example configured to determine alternative recipes with reduced total sugar content as suitable if they have a similar sweetness index.

Alternative recipes may thus be determined as suitable if they have a similar sweetness index, so that they may match the user's taste preference, while reducing the total sugar content.

The processor arrangement may be further configured to:

receive user feedback in respect of their enjoyment of the sweetness of the recipes that have been followed; and
determine alternative recipes with reduced total sugar content as suitable by taking into account the user feedback.

The historical user feedback for example may indicate that the user may in fact enjoy recipes with reduced sweetness index. In such a case, the alternative reduced sugar recipes may not only maintain the same sweetness but a reduction in sweetness may also be considered suitable. The system can learn over time from all recipes and all feedback to make the most suitable alternative recipe suggestions for the user.

The processor arrangement may be further configured to determine if the total sugar content exceeds a threshold, and if the total sugar content is greater than the threshold, identify alternative recipes with a similar sweetness index.

The system can thus maintain a sweetness in the alternative recipe suggestions even though the sugar content is reduced, if a total sugar threshold is initially exceeded.

If the total sugar content is below the threshold, the processor may be further configured to suggest alternative recipes with the same total sugar content.

Thus, if the current recipe already has a low sugar content, the system may suggest alternative recipes which do not aim to reduce the total sugar content. Thus, for some uses of the system (depending on the recipe being followed) the system does not need to make suggestions which lower the total sugar content.

The processor arrangement may be further configured to output the suggested alternative recipes with an indication of their sweetness index and their achieved reduction in total sugar content compared to the recipe that has been followed.

In this way, the user can understand in an intuitive way the benefit of the alternative recipes and the possible change in sweetness, hence the likely change in taste.

The processor arrangement may be configured to identify or receive identification of the ingredients by one or more of:

> receiving input from the user;
> by reading a code associated with packaging of the ingredient;
> by chemical sensing;
> by camera recognition.

Any known approach for sensing food types may be used. The different sugar types for example comprise sucrose, glucose, fructose and maltose.

The system may comprise a blender, juicer or mixer.

The invention also provides a recipe suggestion method, comprising:

> weighing ingredients added to a receptacle during following of a recipe;
> identifying or receiving identification of the ingredients;
> for each identified ingredient and its added weight, estimating a corresponding amount of different sugar types;
> for the combination of ingredients, estimating a total sugar content and a sweetness index;
> determining if there are suitable alternative recipes with reduced total sugar content; and
> suggesting the determined alternative recipes to the user.

The sweetness index for example comprise a weighted sum of the total amounts of the different sugar types in the recipe.

The method may comprise determining alternative recipes with reduced total sugar content as suitable if they have a similar sweetness index. User feedback may be received in respect of their enjoyment of the sweetness of recipes that have been followed and the method then also comprises determining alternative recipes with reduced total sugar content as suitable by taking into account the user feedback.

The invention also provides a computer program for implementing the method defined above.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

> Figure 1 shows a plot of sweetness versus food type and for each food type shows a sweetness index and the total sugar content;
> Figure 2 shows a food preparation system; and
> Figure 3 shows a recipe suggestion method.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a food preparation system which weighs ingredients added to a receptacle. For each identified ingredient and its added weight, a corresponding amount of a set of different sugar types is estimated, and a total sugar content and a sweetness index of the overall recipe is derived from this information. The system determines if there are suitable alternative recipes with reduced total sugar content and suggests such determined alternative recipes to the user. For example, the system may suggest reduced sugar recipes which maintain a desired level of sweetness.

For any particular fruit or vegetable, the total sugar content (TSC) and sweetness index (SI) may be calculated based on the following equations:

$$\text{Total sugar content (TSC)} = \text{sucrose} + \text{glucose} + \text{fructose} + \text{maltose} \qquad (1)$$

$$\text{Sweetness index (SI)} = 1 \times \text{sucrose} + 0.74 \times \text{glucose} + 1.73 \times \text{fructose} + 0.32 \times \text{maltose} \quad (2)$$

The sweetness index is thus a weighted sum of the total amounts of the different sugar types in the recipe. The sweetness of different sugar types is different, so a weighted sum can represent an overall sweetness. Of course different weightings may be used to arrive at a value which represents the overall sweetness.

For a given recipe, the total sugar content and sweetness index can be calculated based on these two equations applied to the combination of the different ingredients in the recipe. The invention makes use of this information to provide recommendations of alternative recipes.

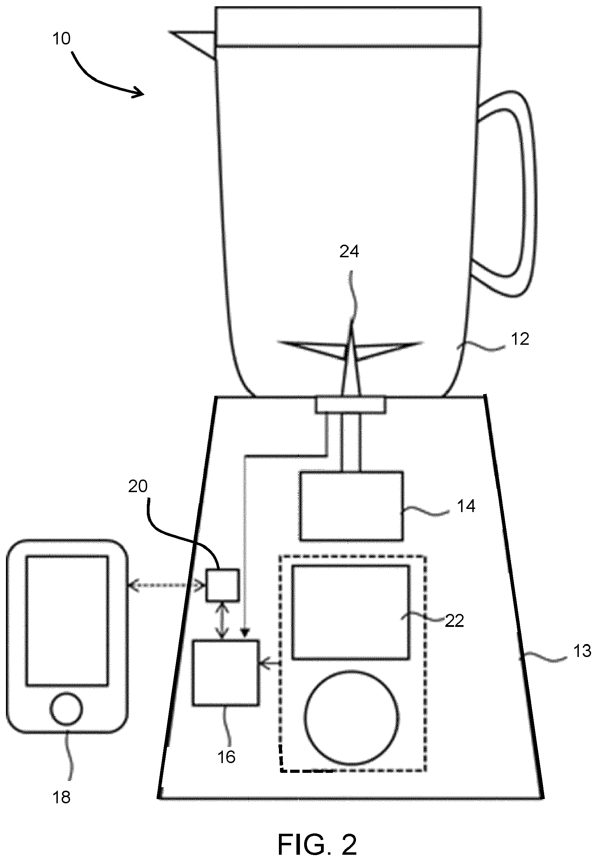

Figure 2 shows a food preparation system 10, comprising a receptacle 12 for receiving ingredients on top of a base 13, and a weight sensor 14 for weighing ingredients added to the receptacle.

A processor arrangement 16 identifies or receives identification of the ingredients added to the receptacle when a recipe is being followed.

The system 10 for example communicates wirelessly with a remote device 18 such as a mobile phone or tablet using a communications module 20, and makes use of the user interface of that device. For example, a user may input identification of ingredients to the device 18 so that the processor arrangement is notified of both the ingredient type from the user and the amount from the weight sensor.

The system may have an additional user interface 22 for receiving user input directly or providing output to the user.

The system is for example a blender or smoothie maker or mixer, for example have a blade 24. The ingredients are thus mixed or blended rather than cooked so that the sugar contents of the ingredients are replicated in the end product.

For each identified ingredient and its added weight, a corresponding amount of a set of different sugar types is obtained. This information is for example obtained from a database which has been loaded onto the remote device 18 as part of an app which is used to implement the system functionality.

For the combination of ingredients, a total sugar content and a sweetness index are obtained, using equations (1) and (2) above.

The processor arrangement 16 then determines if there are suitable alternative recipes with reduced total sugar content. Note that the processor arrangement may comprise a processor 16 in the base 13 in combination with a processor of the remote device 18 which runs the app. Thus, the different processing tasks may be performed in one or multiple locations.

The processing arrangement then suggests one or more of such determined alternative recipes to the user using the user interface of the remote device (e.g. screen and speaker) and/or the user interface 22. In at least some cases, alternative recipes are selected which reduce the total sugar content so that more healthy alternatives are presented to the user. The alternative recipes may be chosen with a similar sweetness index, so that they may match the user's taste preference, while reducing the total sugar content.

The alternative recipes may for example be chosen with similar key ingredients (so that they represent a similar recipe but with reduced sugar) or they may be completely different (so they represent alternative recipe choices for the user).

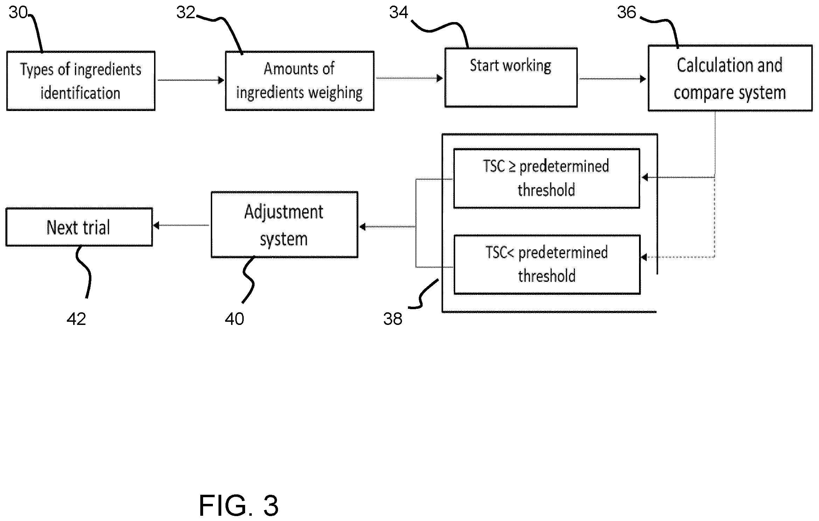

Figure 3 shows in more detail one example of a method implemented by the system.

In step 30, the ingredient types are identified. A user can interact with the device and input the ingredients used by means of the remote device 18 or directly by the user interface 22. The user may use voice input or may input the via a touchscreen. Instead, camera recognition or even chemical sensing may be used for the actual ingredients. A camera in the mobile phone or built-in camera in any other device may be used for visual recognition. The camera input may be based on an image of the actual food item, or its packahging, such as a bar code. Any suitable known way to input a food type may be used.

In step 32, the added ingredients are weighed using the built-in weighing senor. It measures changes in weight as ingredients are added. Weights could of course instead be recorded separately and input user a user interface.

The calculations commence in step 34. In step 36 the total sugar content and sweetness index are calculated as explained above.

Step 36 involves accessing one or more databases of information.

A first source of information is the sugar contents for differnet ingredients, by sugar type:

Table 2

| Ingredients | Id code | TSC (g/100g) | Sucrose (g/100g) | Glucose (g/100g) | Fructose(g/100g) | Maltose (g/100g) |
|---|---|---|---|---|---|---|
| Apple | F22001 | X | X1 | X2 | X3 | X4 |
| Orange | F22002 | Y | Y1 | Y2 | Y3 | Y4 |
| Pear | F22003 | Z | Z1 | Z2 | Z3 | Z4 |
| Carrot | G00001 | $\alpha$ | $\alpha$1 | $\alpha$2 | $\alpha$3 | $\alpha$4 |
| ...... | | | | | | |

A second source of information is the particular ingredients for a given recipe:

Table 3

| Ingredients | Id code | Amount | Sugar content |
|---|---|---|---|
| Apple | F22001 | x1g | y1 |
| Pear | F22003 | x2g | y2 |
| Carrot | G00001 | x3g | y3 |
| Kale | G0002 | x4g | y4 |
| Water | L0001 | x5ml | 0 |

The composition of the sugar contents for different sugar types in the recipe combines the information from Tables 2 and 3:

Table 4

| Ingredients | Id code | Amounts | Sugar content (g/100g) | Glucose (g/100g) | Sucrose (g/100g) | Fructose (g/100g) | Maltose (g/100g) |
|---|---|---|---|---|---|---|---|
| Apple | F22001 | x1 gram | y1 | y1G | y1S | y1F | y1M |
| Pear | F22003 | x2 gram | y2 | y2G | y2S | y2F | y2M |
| Carrot | G00001 | x3 gram | y3 | y3G | y3S | y3F | y3M |
| Kale | G00002 | x4 gram | y4 | y4G | y4S | y4F | y4M |
| Water | L00001 | x5 ml | 0 | 0 | 0 | 0 | 0 |

For this particular recipe (recipe number 1), the total sugar content TSC-1 and sweetness index SI-1 can be calculated using Table 4:

$$\text{TSC} - 1 = (\frac{x1}{100} \times y1) + (\frac{x2}{100} \times y2) + (\frac{x3}{100} \times y3) + (\frac{x4}{100} \times y4)$$

$$SI - 1 = (1 \times \text{Sucrose content}) + (0.74 \times \text{glucose content}) + (1.73 \times \text{fructose content})$$
$$+ (0.32 \times \text{maltose content})$$

Wherein:

$$\text{Glucose content (g)} = \left(\frac{x1}{100} \times y1G\right) + \left(\frac{x2}{100} \times y2G\right) + \left(\frac{x3}{100} \times y3G\right) + \left(\frac{x4}{100} \times y4G\right)$$

$$\text{Sucrose content (g)} = \left(\frac{x1}{100} \times y1S\right) + \left(\frac{x2}{100} \times y2S\right) + \left(\frac{x3}{100} \times y3S\right) + \left(\frac{x4}{100} \times y4S\right)$$

$$\text{Fructose content (g)} = \left(\frac{x1}{100} \times y1F\right) + \left(\frac{x2}{100} \times y2F\right) + \left(\frac{x3}{100} \times y3F\right) + \left(\frac{x4}{100} \times y4F\right)$$

$$\text{Maltose content (g)} = \left(\frac{x1}{100} \times y1M\right) + \left(\frac{x2}{100} \times y2M\right) + \left(\frac{x3}{100} \times y3M\right) + \left(\frac{x4}{100} \times y4M\right)$$

A comparison is made in step 38 between the recipe that has been followed and other recipes in the database.

A total sugar content threshold may be applied to the recipe that has been followed to determine if there are likely to be other recipes with lower sugar content which can be recommended to the user. The threshold value is a given fraction of sugar content by weight. For example:

$$\text{Threshold value (g)} = X/25$$

X is the total weight of the recipe and the ratio 1/25 is obtained as empirical data from testing. The threshold may of course be different, and indeed the use of the threshold is optional.

Step 40 is an adjustment step. If the value of the total sugar content is above the threshold value then the system will judge (in step 38) that it is feasible to reduce the sugar content while maintaining a similar sweetness index (i.e. taste).

In a main functional operation of the system, step 40 will then identify other recipes of similar sweetness index but reduced total sugar content and these will be output to the user.

If in step 38 the total sugar content is found to be below the threshold, then it may be determined that it is not possible to reduce sugar content while maintaining a similar sweetness taste. Instead, alternative recipes may be suggested which also result in a reduced sweetness or else have the same sugar content. Thus, if the current recipe already has a low sugar content, the system may suggest alternative recipes which do not aim to reduce the total sugar content. Thus, some uses of the system (depending on the recipe being followed) will result in suggestions which do no need to lower the total sugar content.

The adjustment step 40 can thus recommend recipes of different performance of sugar reduction in a segmented way, meanwhile, store the recipes data and wait for the next system use.

The range of sugar reduction and changes of sweetness for the alternative recipe recommendations may be presented to the user grouped by the sweetness index, or grouped by the achieved sugar reduction, or both.

For example, a list of alternative recipes may be grouped as "similar sweetness", "reduced sweetness" and "increased sweetness" or by degrees (in %) of sugar reduction.

Based on the tested data, it has been found that a sugar reduction in the range 5 to 30% is typically achievable while maintaining a same sweetness index and for a similar recipe (i.e. a similar combination of fruits and vegetables).

The processor arrangement may also receive user feedback in respect of the user's enjoyment of the sweetness of the recipes that have been followed. In this way, the alternative recipes with reduced total sugar content may be selected taking into account the user feedback. The historical user feedback for example may indicate that the user may in fact enjoy recipes with reduced sweetness index compared to the currently selected recipe. In such a case, the alternative reduced sugar recipes may not only maintain the same sweetness but a reduction in sweetness may also be considered suitable. The system can learn over time from all recipes and all feedback to make the most suitable alternative recipe suggestions for the user.

When the users start to operate the system again in step 42, the system can first represent the information of the recipe they tried the last time and show the performance of sugar reduction (and sweetness index) of new recipes. If they are interested, a user can select a suitable new recipe in the app.

As is clear from the description above it may not always be possible to suggest alternative recipes with reduced sugar content (e.g. if a chosen recipe has almost no sugar). The suggestion of alternative recipes with the same or even greater sugar content may then be suitable for that particular user. However, for users who select high sugar recipes, the system is able to suggest alternatives to improve the health of the user while take account of their preference for high sweetness in their chosen recipes.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

**Claims**

1. A food preparation system, comprising:

   a receptacle (12) for receiving ingredients;
   a weight sensor (14) for weighing ingredients added to the receptacle; and
   a processor arrangement (16) configured to:

   identify or receive identification of the ingredients added to the receptacle when a recipe is being followed;
   for each identified ingredient and its added weight, estimate a corresponding amount of a set of different sugar types;
   for the combination of ingredients, estimate a total sugar content and a sweetness index;
   determine if there are suitable alternative recipes with reduced total sugar content; and
   suggest the determined alternative recipes to the user.

2. The system of claim 1, wherein the sweetness index comprises a weighted sum of the total amounts of the different sugar types in the recipe.

3. The system of claim 1 or 2, wherein the processor arrangement (16) is configured to determine alternative recipes with reduced total sugar content as suitable if they have a similar sweetness index.

4. The system of any one of claims 1 to 3, wherein the processor arrangement (16) is further configured to:

   receive user feedback in respect of their enjoyment of the sweetness of the recipes that have been followed; and
   determine alternative recipes with reduced total sugar content as suitable by taking into account the user feedback.

5. The system of any one of claims 1 to 4, wherein the processor arrangement (16) is further configured to determine if the total sugar content exceeds a threshold, and if the total sugar content is greater than the threshold, identify alternative recipes with a similar sweetness index.

6. The system of claim 5, wherein, if the total sugar content is below the threshold, the processor arrangement (16) is further configured to suggest alternative recipes with the same total sugar content.

7. The system of any one of claims 1 to 6, wherein the processor arrangement (16) is further configured to output the suggested alternative recipes with an indication of their sweetness index and their achieved reduction in total sugar content compared to the recipe that has been followed.

8. The system of any one of claims 1 to 7, wherein the processor arrangement (16) is configured to identify or receive identification of the ingredients by one or more of:

   receiving input from the user;
   by reading a code associated with packaging of the ingredient;
   by chemical sensing;
   by camera recognition.

9. The system of any one of claims 1 to 8, wherein the different sugar types comprise sucrose, glucose, fructose and maltose.

10. The system of any one of claims 1 to 9, comprising a blender, juicer or mixer.

11. A recipe suggestion method, comprising:

   weighing ingredients added to a receptacle during following of a recipe;
   identifying or receiving identification of the ingredients;
   for each identified ingredient and its added weight, estimating a corresponding amount of different sugar types;
   for the combination of ingredients, estimating a total sugar content and a sweetness index;
   determining if there are suitable alternative recipes with reduced total sugar content; and
   suggesting the determined alternative recipes to the user.

12. The method of claim 11, wherein the sweetness index comprises a weighted sum of the total amounts of the different sugar types in the recipe.

13. The method of claim 11 or 12, comprising determining alternative recipes with reduced total sugar content as suitable if they have a similar sweetness index.

14. The method of any one of claims 11 to 13, comprising:

   receiving user feedback in respect of their enjoyment of the sweetness of recipes that have been followed; and
   determining alternative recipes with reduced total sugar content as suitable by taking into account the user feedback.

15. A computer program comprises computer program code which is adapted, when said program is run on a computer, to implement the method of any one of claims 11 to 14.

FIG. 1

FIG. 2

FIG. 3

Europäisches
Patentamt

European
Patent Office

Office européen
des brevets

## EUROPEAN SEARCH REPORT

Application Number

EP 21 16 9485

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | US 2017/035249 A1 (DICKSON JR THOMAS D [US] ET AL) 9 February 2017 (2017-02-09)<br>* paragraphs [0002], [0009], [0010], [0013], [0027], [0043], [0044], [0057]; claims; figures * | 1-5,7-15<br><br>6 | INV.<br>A47J36/32 |
| X<br><br>A | US 2020/359842 A1 (KOH SANG WOOK [KR]) 19 November 2020 (2020-11-19)<br>* paragraphs [0012] - [0015], [0037] - [0048], [0059]; claims; figures * | 1-3,<br>7-13,15<br>4-6,14 | |

TECHNICAL FIELDS
SEARCHED (IPC)

A47J

The present search report has been drawn up for all claims

| Place of search | Date of completion of the search | Examiner |
|---|---|---|
| Munich | 11 October 2021 | Acerbis, Giorgio |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 4 035 576 A1**

## ANNEX TO THE EUROPEAN SEARCH REPORT
## ON EUROPEAN PATENT APPLICATION NO.

EP 21 16 9485

This annex lists the patent family members relating to the patent documents cited in the above-mentioned European search report.
The members are as contained in the European Patent Office EDP file on
The European Patent Office is in no way liable for these particulars which are merely given for the purpose of information.

11-10-2021

| Patent document cited in search report | | Publication date | Patent family member(s) | | Publication date |
|---|---|---|---|---|---|
| US 2017035249 | A1 | 09-02-2017 | NONE | | |
| US 2020359842 | A1 | 19-11-2020 | CN | 111557604 A | 21-08-2020 |
| | | | KR | 102052573 B1 | 05-12-2019 |
| | | | US | 2020359842 A1 | 19-11-2020 |

EPO FORM P0459

For more details about this annex : see Official Journal of the European Patent Office, No. 12/82